# EUROPEAN PATENT SPECIFICATION

(11) **EP 4 261 010 B1**
(45) Date of publication and mention of the grant of the patent: **16.07.2025**
(21) Application number: 22305517.9
(22) Date of filing: 11.04.2022
(51) Int. Cl.: B29C 51/16, B29C 51/26, B29C 51/08, B29L 31/30

(54) **APPARATUS AND PROCESS FOR PRODUCING A TRIM PANEL**
VORRICHTUNG UND VERFAHREN ZUR HERSTELLUNG EINER VERKLEIDUNGSPLATTE
APPAREIL ET PROCÉDÉ DE FABRICATION D'UN PANNEAU DE GARNITURE

(43) Date of publication of application: 18.10.2023
(73) Proprietor: Faurecia Intérieur Industrie, 92000 Nanterre (FR)
(72) Inventor: BONDOERFFER, Marc, 46120 ALBORAYA (ES); RODRIGUEZ GONZALES, CÉSAR, 12003 CASTELLON DE LA PLANA (ES); ALCOY CHANZA, VICENTE, 46290 ALCACER (VALENCIA) (ES)
(74) Representative: Novagraaf Group

(56) References cited:
- JP-A- 2000 033 839
- JP-A- H08 258 132
- KR-B1- 102 175 880
- US-A- 5 076 880
- US-A- 5 718 791
- US-A1- 2003 155 685
- US-A1- 2016 361 837
- US-B2- 6 524 506

## Description

The present invention concerns the manufacturing of trim panels having at least a substrate and a cover sheet laminated to said substrate.

It is possible to manufacture such a trim panel using an apparatus comprising a first mold section, with a first surface area and a holding device holding the substrate against the first surface area, and a second mold section, with a second surface area on which the cover sheet is secured using pneumatic pins.

The cover sheet is laminated on the substrate by moving the first mold section against the second mold section, such that the first surface area is pressed against the second surface area.

The behavior of the cover sheet is poorly controlled when the apparatus is closed by moving the first mold section against the second mold section. Material sometimes accumulate in curved or corner areas, creating unwanted folds in the cover sheet. The appearance of the trim part is not satisfactory in this case.

US 2016/361837, JP H08 258132 A, JP 2000 033839 A, KR 102 175 880 B1, US 5 076 880 A, US 2003/155685, US 6 524 506 B2 and US 5 718 791 A describe devices and methods for producing a trim panel in accordance with the preambles of the independent claims. JP 2000 033839 A and KR 102 175 880 B1 describe longitudinal sliders movable with respect to one of the mold sections.

An objective of the invention is to propose an apparatus/ process that does not present said drawback.

The problem is solved by an apparatus for producing a trim panel according to claim 1.

Since an edge of the cover sheet is clamped between the first clamping member and the second clamping member in the clamping position, the cover sheet is properly controlled when the first mold section and the second mold section are moved to the molding position. It is possible to avoid that material accumulates in curved or corner areas, creating unwanted folds in the cover sheet. The appearance of the trim part is improved.

The apparatus may present one or several of the features corresponding to claims 2 to 7, considered alone or according to any technically feasible combination.

According to a second aspect, the invention relates to a process according to claim 8.

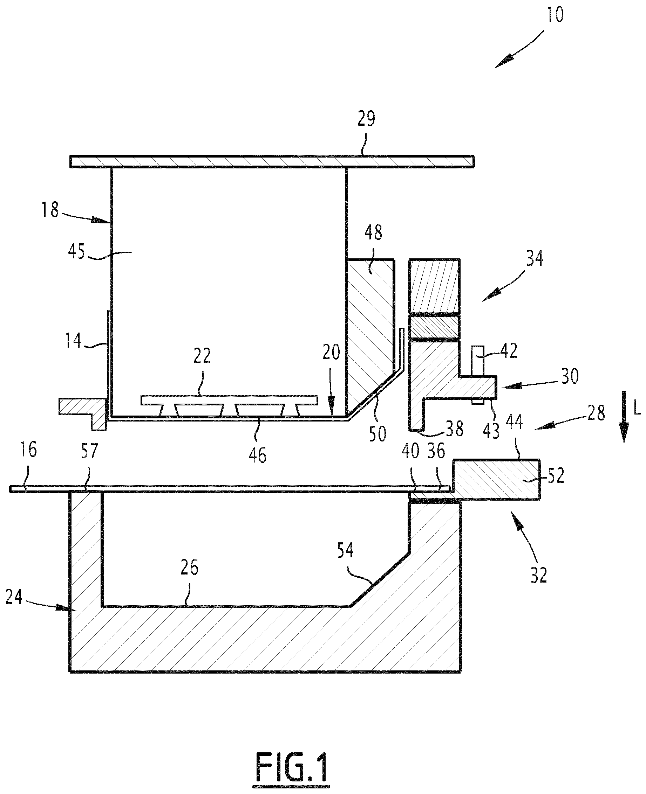

Other features and advantages of the invention will become apparent when reading the following description, given purely as an example, with regard to the figures 1 to 6 showing the successive steps of the process in a schematic manner.

The apparatus 10 depicted on the figures 1 to 6 is for producing a trim panel 12 having at least a substrate 14 and a cover sheet 16 laminated to said substrate 14.

The trim panel 12 is for example used to cover the inner surface of automobile doors, or the dashboard, or any other surface of the cockpit of the vehicle.

The trim panel 12 may be a sun visor.

The substrate 14 is a panel of a substantially rigid material. It is typically made of a plastic material such as Acrylonitrile Butadiene Styrene (ABS), Polycarbonate/Acrylonitrile Butadiene Styrene (PC/ABS), Polyproylene (PP).

The cover sheet 16 is a decorative sheet, visible for the passengers of the vehicle.

The cover sheet 16 has a decorative layer, typically made of a plastic material, a textile, a leather or a genuine material such as wood, stone .... Advantageously, the cover sheet 16 comprises a foam backing arranged on the back of the decorative layer.

The cover sheet 16 is flexible and can be folded when exerting a pressure of average magnitude.

The apparatus 10 comprises:
- a first mold section 18, with a first surface area 20 and a holding device 22 holding the substrate 14 on the first surface area 20;
- a second mold section 24, with a second surface area 26;
- a clamping frame 28; and
- a main drive 29 moving the first mold section 18 and the second mold section 24 with respect to one another between a molding position and an open position.

The first surface area 20 has the shape required for the inner surface of the trim part. The inner surface is the surface typically turned opposite the cockpit of the vehicle and not visible by the passengers.

The holding device 22 is for example a vacuum device, or a mechanical clamping device, or any other device adapted for holding the substrate 14 against the first surface area 20.

The second surface area 26 has the shape required for the outer surface of the trim part. The outer surface is the surface typically turned toward the cockpit of the vehicle and visible by the passengers.

The first surface area 20 has a shape complementary of the shape of the second surface area 26. It means that the first surface area 20 can fit against the second surface area 26 with a little or no spacing between them.

In the example, the first surface area 20 is convex, and the second surface area 26 is concave.

The main drive 29 is for example an hydraulic cylinder, or a pneumatic cylinder, or any other type of actuator.

The main drive 29 typically moves the first mold section 18 with respect to the second mold section 24 longitudinally between the molding position and the open position.

The longitudinal direction L is shown on the figures.

In other words, the second mold section 24 is fixed, and the first mold section 18 is moved by the main drive 29. According to an alternative embodiment, the first mold section 20 is fixed, and the second mold section 24 is moved by the main drive 29. According to another alternative embodiment, the first mold section 20 and the second mold section 24 are moved by the main drive 29.

Typically, the first mold section 18 moves in translation with respect to the second mold section 24 between the molding position and the open position, along the longitudinal direction shown on the figures.

According to an alternative embodiment, the displacement of the first mold section is not a translation. It is a rotation or a combination of translation(s) and rotation(s).

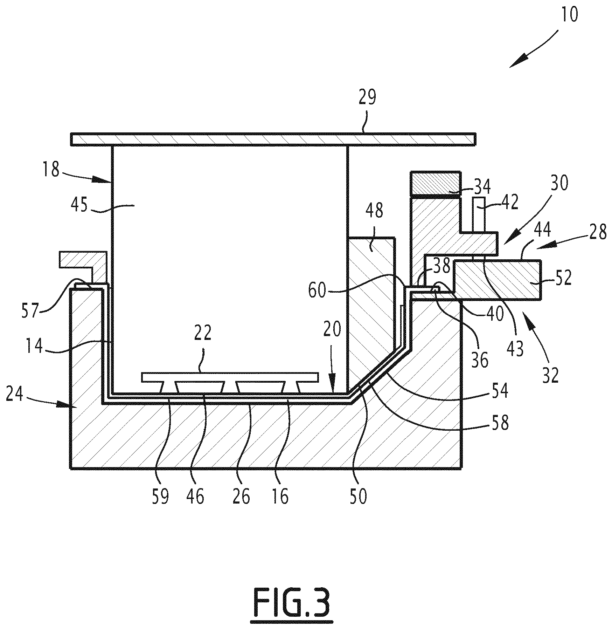

The first surface area 20 and the second surface area 26 are pressed against one another with the substrate 14 and the cover sheet 16 between them in the molding position (figures 3 to 6).

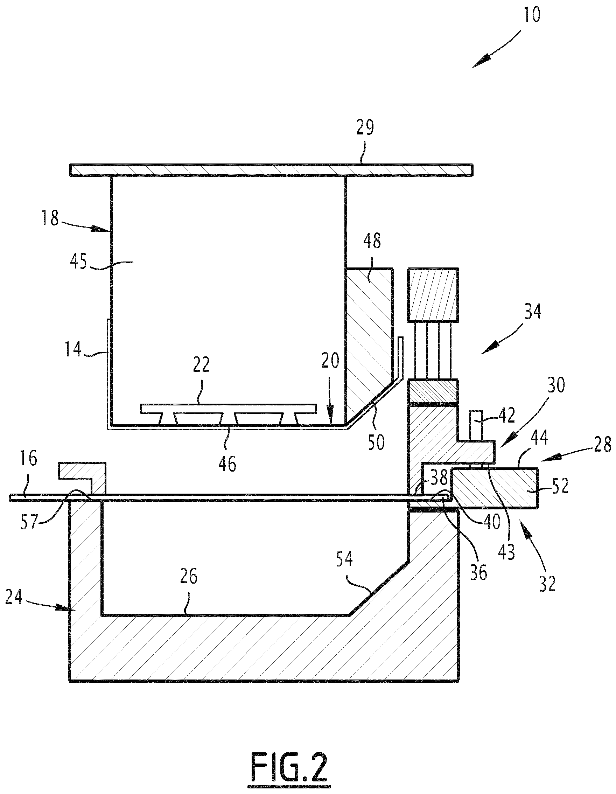

The first surface area 20 and the second surface area 26 are away from one another in the open position (figures 1 and 2).

In the open position, the first surface area 20 and the second surface area 26 are located one in front of the other.

The clamping frame 28 comprises a first clamping member 30, a second clamping member 32 and a clamping drive 34 moving the first clamping member 30 and the second clamping member 32 with respect to one another between a cover sheet clamping position (figures 2 and 3) and a cover sheet release position (figure 1).

An edge 36 of the cover sheet 16 is clamped between the first clamping member 30 and the second clamping member 32 in the clamping position.

The edge 36 of the cover sheet 16 is free with respect to the first clamping member 30 and/or the second clamping member 32 in the release position.

The first clamping member 30 is a frame.

It has a substantially closed contour, and surrounds an empty space. It is arranged around the first mold section 18, as shown on the figures.

The second clamping member 32 has a substantially closed contour. It surrounds an empty space. It is arranged around the second surface area 26, as shown on the figures.

The first clamping member 30 has a first clamping surface 38.

The second clamping member 32 has a second clamping surface 40.

The first clamping surface 30 and the second clamping surface 32 clamp the edge 36 of the cover sheet 16 between them in the clamping position (figure 2).

The first clamping surface 30 is turned longitudinally in one direction, toward the second clamping section 24. The second clamping surface 32 is turned longitudinally in the opposite direction.

When the first mold section 18 and the second mold section 24 are in the open position, the cover sheet 16 extends between the first surface area 20 and the second surface area 26 in the clamping position of the clamping frame 30.

The clamping drive 34 is typically a pneumatic or hydraulic cylinder or any other type of actuator.

The clamping drive 34 moves the first clamping member 30 longitudinally in translation with respect to the second clamping member 32.

The clamping frame 28 is arranged for adjusting the clamping force by which the edge 36 of the cover sheet 16 is clamped between the first clamping member 30 and the second clamping member 32 in the clamping position.

The clamping frame 28 comprises for this purpose an adjustable stopper 42, able to adjust the spacing between the first clamping surface 38 and the second clamping surface 40 in the clamping position.

The adjustable stopper 42 comprises for example one or several screws, mounted on the first clamping member 30. The or each screw protrudes longitudinally with respect to a lower surface 43 of the first clamping member 30 turned tower the second clamping member 32. The height by which the or each screw protrudes is adjustable. In the clamping position, the adjustable stopper 42 is in abutment against an upper surface 44 of the second clamping member 32.

Changing the position of the screws with respect to the lower surface 44 allows changing the longitudinal position of the first clamping member 30 with respect to the second clamping member 32 in the clamping position, and thus the longitudinal position of the first clamping surface 38 with respect to the second clamping surface 40 in the clamping position. This in turn allows changing the longitudinal spacing between the first clamping surface 38 and the second clamping surface 40 in the clamping position.

The clamping force by which the edge 36 of the cover sheet 16 is clamped between the first clamping member 30 and the second clamping member 32 in the clamping position can be adjusted as well by changing the force applied by clamping drive 34.

Another possibility for adjusting said clamping force is using supplements arranged between the clamping drive 34 and the first clamping member 30. A supplement is spacer having a reduced thickness, arranged between the piston of the cylinder and the first clamping member 30, for example a washer or a plate. Adding or removing one or several supplements allows changing the longitudinal position of the first clamping surface 38 with respect to the second clamping surface 40 in the clamping position and thus the longitudinal spacing between the first clamping surface 38 and the second clamping surface 40.

The first mold section 18 comprises a main part 45 defining a main area 46 of the first surface area 20, and at least one longitudinal slider 48 movable with respect to the main part 44 between an extended position (figures 1 to 3) and a retracted position (figures 4 and 5).

The at least one longitudinal slider 48 is displaced with respect to the main part 44 by an actuator, not shown on the figures. The actuator is typically a cylinder, pneumatic or hydraulic.

The or each longitudinal slider 48 defines a first surface edge area 50 of the first surface area 20 in the extended position.

The or each longitudinal slider 48 is retracted longitudinally away from the first surface area 20 in the retracted position.

The or each longitudinal slider 48 is for folding the edge of the cover sheet 16 around the free edge of the substrate 14, as will be described further down.

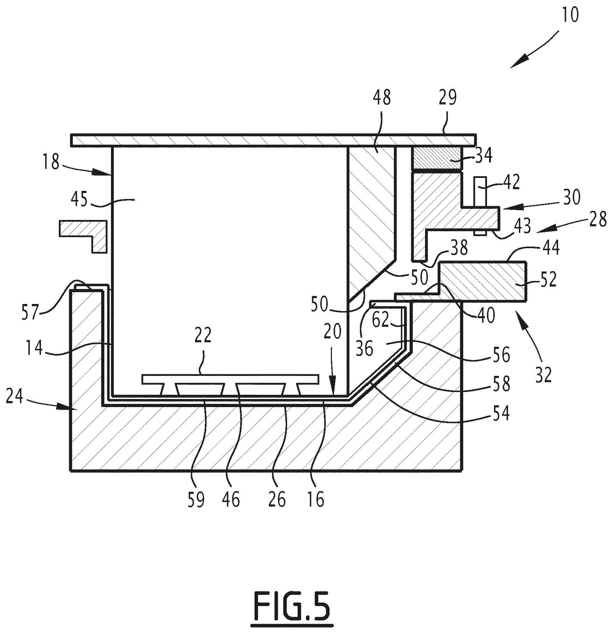

For that purpose, the second clamping member 32 comprises at least one transverse slider 52, movable with respect to the second mold section 24 between an outer position (figures 1 to 4) and an inner position (figure 5).

The or each transverse slider 52 in the inner position extends longitudinally in front of the at least one longitudinal slider 48 when the first mold section 18 is in the molding position with respect to the second mold section 24 and the at least one longitudinal slider 48 is in the retracted position.

More specifically, when the first mold section 18 is in the molding position with respect to the second mold section 24 and the at least one longitudinal slider 48 is in the extended position, the first surface edge area 50 is pressed against a corresponding area 54 of the second surface area 26 (figure 3).

When the first mold section 18 is in the molding position with respect to the second mold section 24 and the at least one longitudinal slider 48 is in the retracted position, a cavity 56 is created in the first mold section 18 for receiving the transverse slider 52 in the inner position (figure 5).

The or each transverse slider 52 in the outer position does not extend longitudinally in front of the at least one longitudinal slider 48. It does not extend, longitudinally, in front of the second surface area 26.

Advantageously, the or each transverse slider 52 defines a part of the second clamping surface 40.

As shown on the figures, the second surface area 26 is a depression, surrounded by an upper edge 57 having a closed contour.

Typically, a part of the second clamping member 32 is made by at least one portion of the upper edge 57, and another part of the second clamping member 32 is made by the or each transverse slider 52.

A part of the second clamping surface 40 is made by at least one portion of the upper edge 57, and another part of the second clamping surface 40 is made by the or each transverse slider 52.

For example, if the second clamping member 32 comprises several transverse sliders 52, the second clamping member 32 comprises several portions of the upper edge 57, separated from one another by the transverse sliders 52.

The process for producing the trim panel 12 will be detailed below.

The process is designed for being implemented using the apparatus 10 described above. Conversely, the apparatus 10 is particularly adapted for carrying out the process detailed below.

The process comprises the following steps:
- arranging the substrate 14 against a first surface area 20 of a first mold section 18;
- arranging the cover sheet 16 in a clamping frame 28, an edge 36 of the cover sheet 16 being clamped between a first clamping member 30 and a second clamping member 32, the cover sheet 16 extending between the first surface area 20 and a second surface area 26 of a second mold section 24;
- moving the first mold section 18 and the second mold section 24 with respect to one another to a molding position, the first surface area 20 and the second surface area 26 being pressed against one another with the substrate 14 and the cover sheet 16 between them in the molding position.

The main drive 29 moves the first mold section 18 with respect to the second mold section 24 longitudinally between the molding position and the open position.

The first mold section 18 is as described above.

The clamping frame 28, the first clamping member 30 and the second clamping member 32 are as described above.

The step of arranging the substrate 12 against the first surface area 20 and the step of arranging the cover sheet 16 in the clamping frame 28 are carried out with the first mold section 18 and the second mold section 24 in an open position with respect to one another.

The first surface area 20 and the second surface area 26 are away from one another in the open position, as shown in the figure 1.

The substrate 14 is arranged against the first surface area 20 by mean of a holding device 22. The holding device 22, as described above, is for example a vacuum device, or a mechanical clamping device.

The cover sheet 16 is arranged in the clamping frame 28 as shown in the figures 1 and 2.

The first clamping member 30 and the second clamping member 32 are initially in a release position with respect to one another (figure 1). The first clamping member 30 and the second clamping member 32 are longitudinally away from one another.

The cover sheet 16 is secured to the second clamping member 32, for example using pins (not shown on the figures) arranged on the second clamping surface 40.

Then, the first clamping member 30 and the second clamping member 32 are brought to a cover sheet clamping position with respect to one another (figure 2).

The first clamping member 30 is moved longitudinally with respect to the second clamping member 32.

The first clamping member 30 stops when the adjustable stopper 42 comes in abutment against the upper surface 44 of the second clamping member 32.

The edge 36 of the cover sheet 14 is clamped between the first clamping member 30 and the second clamping member 32 in the clamping position, and more specifically between the first clamping surface 38 and the second clamping surface 40.

The spacing between the first clamping surface 38 and the second clamping surface 40 in the clamping position is adjusted by mean of the adjustable stopper 42.

It is adjusted as a function of the thickness of the cover sheet 16, and of the clamping force by which the edge 36 of the cover sheet 16 must clamped between the first clamping member 30 and the second clamping member 32.

The adjustable stopper 42 is as described above.

In some cases, the edge 36 of the cover sheet must be strongly clamped, such that the position of the edge 36 does not shift when the first molding section 18 and the second molding section 24 are brought to the molding position. In other instances, the edge 36 of the cover sheet must be less strongly clamped, such that the position of the edge 36 is allowed to shift when the first molding section 18 and the second molding section 24 are brought to the molding position.

Alternatively, or in addition, the clamping force is adjusted by changing the force applied by clamping drive 34, and/or using supplements arranged between the clamping drive 34 and the first clamping member 30, as described above.

The molding position is shown on the figure 3.

The substrate 14 and a central part 58 of the cover sheet 16 are pinched between the first surface area 20 and the second area 26. The central part 58 of the cover sheet 16 covers an outer surface 59 of the substrate 14. The edge 36 of the cover sheet is clamped between the first clamping member 30 and the second clamping member 32.

The edge 36 is connected to the central part 58 by a folding line 60 along which the cover sheet 16 is folded.

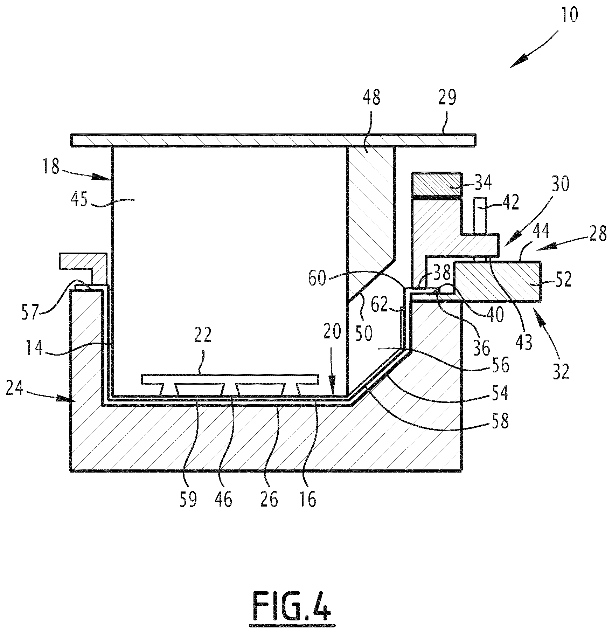

The process further comprises the following additional steps:
- moving at least one longitudinal slider 48 of the first mold section 18 with respect of a main part 45 of the first mold section 18 from an extended position (figures 1 to 3) to a retracted position (figures 4 and 5),
- folding the edge 36 of the cover sheet 18 by moving at least one transverse slider 52 of the second clamping member 32 from an outer position to an inner position.

The or each longitudinal slider 48 is as described above.

As described above, the main part 45 defines the main area 46 of the first surface area 20, the or each longitudinal slider 48 defining a first surface edge area 50 of the first surface area 20 in the extended position.

The or each longitudinal slider 48 is retracted longitudinally away from the first surface area 20 in the retracted position.

The or each transverse slide 52 is as described above.

As described above, the or each transverse slider 52 in the inner position extends longitudinally in front of the at least one longitudinal slider 48 when the first mold section 18 is in the molding position with respect to the second mold section 24 and the at least one longitudinal slider 48 is in the retracted position. The or each transverse slider 52 in the outer position does not extend longitudinally in front of the at least one longitudinal slider 48.

The situation at the end of the moving step is depicted on the figure 4. As shown, in the retracted position, a cavity 56 is created on the side of the first mold section 18, in front of the transverse slider 52.

Between the moving step and the folding step, the first clamping member 30 and the second clamping member 32 are brought back to the release position with respect to one another (figure 5), to release the edge 36.

During the folding step, the or each transverse slider 52 is moved substantially perpendicularly to the longitudinal direction L. The or each transverse slider 52 passes close to the free edge 62 of the substrate 14.

At the beginning of the folding step, the edge 36 of the cover sheet 16 extends on the second clamping surface 40.

When the or each transverse slider 52 is moved from the outer position (figure 4) to the inner position (figure 5), the edge 36 is pivoted around the folding line 60.

In the inner position, the edge 36 extends longitudinally below the or each transverse slider 52. Below means against the surface of the or each transverse slider 52 opposite the second clamping surface 40.

The edge 36 extends in the cavity 56. It extends between the free edge 62 of the substrate 14 and the or each transverse slider 52.

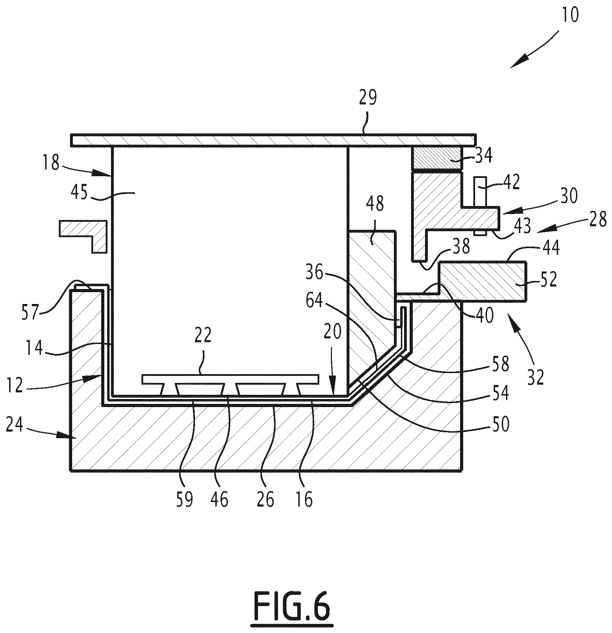

The process further comprises the following additional steps:
- moving the at least one transverse slider 52 of the second clamping member 32 back from the inner position to the outer position;
- moving the at least one longitudinal slider 48 of the first mold section 18 with respect of the main part 45 back from the retracted position (figure 5) to the extended position (figure 6).

During the displacement of the at least one longitudinal slider 48 from the retracted position to the extended position, the edge 36 is folded around the free edge 62 of the substrate. It is pressed against an inner surface 64 of the substrate 14. The inner surface 64 is opposite the outer surface 59.

The first mold section 18 and the second mold section 24 are then moved with respect one another to the open position, and the trim part 12 is removed.

Alternative embodiments can be considered for the apparatus / process described above.

The first clamping member 30 and / or the second clamping member 32 do not necessarily have a substantially closed contour. It can be open along a part of its contour.

The number of transverse sliders and the positions of the transverse sliders are chosen as a function of the portions of the free edge 62 of the substrate around which the edge 16 of the cover sheet must be folded.

The number of longitudinal sliders and the positions of the longitudinal sliders are chosen in consideration of the positions of the transverse sliders.

The apparatus / process described above has significant advantages.

Since the clamping frame is arranged for adjusting the clamping force by which the edge of the cover sheet is clamped between the first clamping member and the second clamping member in the clamping position, it is possible to control the displacement of the cover sheet when the main drive moves the first mold section and the second mold section with respect to one another to the molding position. This is particularly useful when the trim part comprises areas like curves or corners, where it is necessary to hold the cover sheet or to allow the edge to slide, depending on the properties of the material constituting the cover sheet.

When the clamping frame comprises an adjustable stopper, able to adjust the spacing between the first clamping surface and the second clamping surface in the clamping position, the clamping force can be easily adjusted. The apparatus can be readily adapted to cover sheets having various thicknesses or made from various materials.

When the first mold section comprises a main part defining a main area of the first surface area and at least one longitudinal slider movable with respect to the main part between an extended position and a retracted position, it becomes possible to laminate the cover sheet on the substrate and to fold the edge of the substrate in the same apparatus. In the state of the art, two different apparatus are frequently used to carry out these two operations. In the invention, the cover sheet is laminated on the substrate using both the main part and the at least one longitudinal slider. The at least one longitudinal slider is also used for folding the edge of the cover sheet. The apparatus is thus particularly compact.

When the second clamping member comprises at least one transverse slider, movable with respect to the second mold section between an outer position and an inner position, the apparatus is particularly compact. The transverse slider is integrated in the clamping frame.

When the or each transverse slider defines a part of the second clamping surface, the apparatus is particularly compact. The or each transverse slider are used both to clamp the cover sheet and to fold the edge of the cover sheet.

## Claims

1. Apparatus for producing a trim panel (12) having at least a substrate (14) and a cover sheet (16) laminated to said substrate (14), the apparatus (10) comprising:
- a first mold section (18), with a first surface area (20) and a holding device (22) holding the substrate (14) on the first surface area (20);
- a second mold section (24), with a second surface area (26);
- a clamping frame (28), with a first clamping member (30), a second clamping member (32) and a clamping drive (34) moving the first clamping member (30) and the second clamping member (32) with respect to one another between a cover sheet clamping position and a cover sheet release position, an edge (36) of the cover sheet (16) being clamped between the first clamping member (30) and the second clamping member (32) in the clamping position, the edge (36) of the cover sheet (16) being free with respect to the first clamping member (30) and/or the second clamping member (32) in the release position, the cover sheet (16) extending between the first surface area (20) and the second surface area (26) in the clamping position;
- a main drive (29) moving the first mold section (18) and the second mold section (24) with respect to one another between a molding position and an open position, the first surface area (20) and the second surface area (26) being pressed against one another with the substrate (14) and the cover sheet (16) between them in the molding position, the first surface area (20) and the second surface area (26) being away from one another in the open position, wherein the main drive (29) moves the first mold section (18) with respect to the second mold section (24) longitudinally between the molding position and the open position,
the apparatus being **characterized in that**
the first mold section (18) comprises a main part (45) defining a main area (46) of the first surface area (20) and at least one longitudinal slider (48) movable with respect to the main part (45) between an extended position and a retracted position, the or each longitudinal slider (48) defining a first surface edge area (50) of the first surface area (20) in the extended position, and the or each longitudinal slider (48) being retracted longitudinally away from the first surface area (20) in the retracted position.

2. The apparatus according to claim 1, in which the clamping frame (28) is arranged for adjusting the clamping force by which the edge (36) of the cover sheet (16) is clamped between the first clamping member (30) and the second clamping member (32) in the clamping position.

3. The apparatus according to claim 1 or 2, in which the first clamping member (30) has a first clamping surface (38), the second clamping member (32) has a second clamping surface (40), the first clamping surface (38) and the second clamping surface (40) clamping the edge (36) of the cover sheet (16) between them in the clamping position.

4. The apparatus according to claim 3, in which the clamping frame (28) comprises an adjustable stopper (42), able to adjust the spacing between the first clamping surface (38) and the second clamping surface (40) in the clamping position.

5. The apparatus according to any one of claims 1 to 4, in which the second clamping member (32) comprises at least one transverse slider (52), movable with respect to the second mold section (24) between an outer position and an inner position, wherein the or each transverse slider (52) in the inner position extends longitudinally in front of the at least one longitudinal slider (48) when the first mold section (18) is in the molding position with respect to the second mold section (24) and the at least one longitudinal slider (48) is in the retracted position, the or each transverse slider (52) in the outer position does not extend longitudinally in front of the at least one longitudinal slider (48).

6. The apparatus according to claim 5 and claim 3 or 4, in which the or each transverse slider (52) defines a part of the second clamping surface (40).

7. The apparatus according to claim 5 or 6, in which:
- when the first mold section (18) is in the molding position with respect to the second mold section (24) and the or each longitudinal slider (48) is in the extended position, the first surface edge area (50) is pressed against a corresponding area (54) of the second surface area (26);
- when the first mold section (18) is in the molding position with respect to the second mold section (24) and the or each longitudinal slider (48) is in the retracted position, a cavity (56) is created in the first mold section (18) for receiving the at least one transverse slider (52) in the inner position.

8. Process for producing a trim panel (10) having at least a substrate (14) and a cover sheet (16) laminated to said substrate (14), the process comprising the following steps:
- arranging the substrate (14) against a first surface area (20) of a first mold section (18);
- arranging the cover sheet (16) in a clamping frame (28), an edge (36) of the cover sheet (16) being clamped between a first clamping member (30) and a second clamping member (32), the cover sheet (16) extending between the first surface area (20) and a second surface area (26) of a second mold section (24);
- moving the first mold section (18) and the second mold section (24) with respect to one another to a molding position, the first surface area (20) and the second surface area (26) being pressed against one another with the substrate (14) and the cover sheet (16) between them in the molding position;
the method being **characterized in**
- moving at least one longitudinal slider (48) of the first mold section (18) with respect of a main part (45) of the first mold section (18) from an extended position to a retracted position, the main part (45) defining a main area (46) of the first surface area (20), the or each longitudinal slider (48) defining a first surface edge area (50) of the first surface area (20) in the extended position, the or each longitudinal slider (48) being retracted longitudinally away from the first surface area (20) in the retracted position;
- folding the edge (36) of the cover sheet (16) by moving at least one transverse slider (52) of the second clamping member (32) from an outer position to an inner position, wherein the or each transverse slider (52) in the inner position extends longitudinally in front of the at least one longitudinal slider (48) when the first mold section (18) is in the molding position with respect to the second mold section (24) and the at least one longitudinal slider (48) is in the retracted position, the or each transverse slider (52) in the outer position does not extend longitudinally in front of the at least one longitudinal slider (48).

## Patentansprüche

1. Einrichtung zum Herstellen einer Verkleidungsplatte (12) mit mindestens einem Substrat (14) und einem auf das Substrat (14) laminierten Deckblatt (16), wobei die Einrichtung (10) umfasst:
- einen ersten Formabschnitt (18) mit einem ersten Oberflächenbereich (20) und einer Haltevorrichtung (22), die das Substrat (14) auf dem ersten Oberflächenbereich (20) hält;
- einen zweiten Formabschnitt (24) mit einem zweiten Oberflächenbereich (26);
- einen Klemmrahmen (28) mit einem ersten Klemmelement (30), einem zweiten Klemmelement (32) und einem Klemmantrieb (34), der das erste Klemmelement (30) und das zweite Klemmelement (32) relativ zueinander zwischen einer Deckblatt-Klemmposition und einer Deckblatt-Freigabeposition bewegt, wobei in der Klemmposition eine Kante (36) des Deckblatts (16) zwischen dem ersten Klemmelement (30) und dem zweiten Klemmelement (32) eingeklemmt ist, in der Freigabeposition die Kante (36) des Deckblatts (16) bezüglich des ersten Klemmelements (30) und/oder des zweiten Klemmelements (32) frei ist und sich das Deckblatt (16) in der Klemmposition zwischen dem ersten Oberflächenbereich (20) und dem zweiten Oberflächenbereich (26) erstreckt;
- einen Hauptantrieb (29), der den ersten Formabschnitt (18) und den zweiten Formabschnitt (24) relativ zueinander zwischen einer Formposition und einer offenen Position bewegt, wobei der erste Oberflächenbereich (20) und der zweite Oberflächenbereich (26) in der Formposition mit dem Substrat (14) und dem Deckblatt (16) dazwischen gegeneinander gedrückt werden, wobei der erste Oberflächenbereich (20) und der zweite Oberflächenbereich (26) in der offenen Position voneinander entfernt sind, wobei der Hauptantrieb (29) den ersten Formabschnitt (18) relativ zu dem zweiten Formabschnitt (24) in Längsrichtung zwischen der Formposition und der offenen Position bewegt,
wobei die Einrichtung **dadurch gekennzeichnet ist, dass** der erste Formabschnitt (18) einen Hauptteil (45), der einen Hauptbereich (46) des ersten Oberflächenbereichs (20) definiert, und mindestens einen Längsschieber (48) umfasst, der in Bezug auf den Hauptteil (45) zwischen einer ausgefahrenen Position und einer eingefahrenen Position beweglich ist, wobei der oder jeder Längsschieber (48) in der ausgefahrenen Position einen ersten Oberflächenkantenbereich (50) des ersten Oberflächenbereichs (20) definiert und der oder jeder Längsschieber (48) in der eingefahrenen Position in Längsrichtung von dem ersten Oberflächenbereich (20) weg zurückgezogen ist.

2. Einrichtung nach Anspruch 1, bei der der Klemmrahmen (28) zum Anpassen der Klemmkraft angeordnet ist, mit der die Kante (36) des Deckblatts (16) in der Klemmposition zwischen dem ersten Klemmelement (30) und dem zweiten Klemmelement (32) eingeklemmt wird.

3. Einrichtung nach Anspruch 1 oder 2, wobei das erste Klemmelement (30) eine erste Klemmoberfläche (38) und das zweite Klemmelement (32) eine zweite Klemmoberfläche (40) aufweist, wobei die erste Klemmoberfläche (38) und die zweite Klemmoberfläche (40) in der Klemmposition die Kante (36) des Deckblatts (16) zwischen sich einklemmen.

4. Einrichtung nach Anspruch 3, bei der der Klemmrahmen (28) einen anpassbaren Anschlag (42) umfasst, mit dem der Abstand zwischen der ersten Klemmoberfläche (38) und der zweiten Klemmoberfläche (40) in der Klemmposition anpassbar ist.

5. Einrichtung nach einem der Ansprüche 1 bis 4, bei der das zweite Klemmelement (32) mindestens einen Querschieber (52) umfasst, der in Bezug auf den zweiten Formabschnitt (24) zwischen einer äußeren Position und einer inneren Position bewegbar ist, wobei sich der oder jeder Querschieber (52) in der inneren Position in Längsrichtung vor dem mindestens einen Längsschieber (48) erstreckt, wenn sich der erste Formabschnitt (18) in Bezug auf den zweiten Formabschnitt (24) in der Formposition befindet und sich der mindestens eine Längsschieber (48) in der zurückgezogenen Position befindet, und sich der oder jeder Querschieber (52) in der äußeren Position nicht in Längsrichtung vor dem mindestens einen Längsschieber (48) erstreckt.

6. Einrichtung nach Anspruch 5 und Anspruch 3 oder 4, bei der der oder jeder Querschieber (52) einen Teil der zweiten Klemmoberfläche (40) definiert.

7. Einrichtung nach Anspruch 5 oder 6, wobei:
- wenn sich der erste Formabschnitt (18) in der Formposition in Bezug auf den zweiten Formabschnitt (24) befindet und der oder jeder Längsschieber (48) sich in der ausgefahrenen Position befindet, der erste Oberflächenkantenbereich (50) gegen einen entsprechenden Bereich (54) der zweiten Oberfläche (26) gedrückt wird;
- wenn sich der erste Formabschnitt (18) in der Formposition in Bezug auf den zweiten Formabschnitt (24) befindet und der oder jeder Längsschieber (48) in der zurückgezogenen Position ist, ein Hohlraum (56) im ersten Formabschnitt (18) zur Aufnahme des mindestens einen Querschiebers (52) in der inneren Position geschaffen wird.

8. Verfahren zum Herstellen einer Verkleidungsplatte (10) mit mindestens einem Substrat (14) und einem auf das Substrat (14) laminierten Deckblatt (16), wobei das Verfahren die folgenden Schritte umfasst:
- Anordnen des Substrats (14) an einem ersten Oberflächenbereich (20) eines ersten Formabschnitts (18);
- Anordnen des Abdeckblatts (16) in einem Klemmrahmen (28), wobei eine Kante (36) des Abdeckblatts (16) zwischen einem ersten Klemmelement (30) und einem zweiten Klemmelement (32) eingeklemmt wird und das Abdeckblatt (16) zwischen dem ersten Oberflächenbereich (20) und einem zweiten Oberflächenbereich (26) eines zweiten Formabschnitts (24) verläuft;
- Bewegen des ersten Formabschnitts (18) und des zweiten Formabschnitts (24) relativ zueinander in eine Formposition, wobei der erste Oberflächenbereich (20) und der zweite Oberflächenbereich (26) in der Formposition mit dem Substrat (14) und dem Deckblatt (16) dazwischen gegeneinander gedrückt werden;
wobei das Verfahren **gekennzeichnet ist durch**
- Bewegen mindestens eines Längsschiebers (48) des ersten Formabschnitts (18) in Bezug auf einen Hauptteil (45) des ersten Formabschnitts (18) von einer ausgefahrenen Position in eine eingefahrene Position, wobei der Hauptteil (45) einen Hauptbereich (46) des ersten Oberflächenbereichs (20) definiert, der oder jeder Längsschieber (48) in der ausgefahrenen Position einen ersten Oberflächenkantenbereich (50) des ersten Oberflächenbereichs (20) definiert, und der oder jeder Längsschieber (48) in der eingefahrenen Position in Längsrichtung von dem ersten Oberflächenbereich (20) weg zurückgezogen ist,
- Falten der Kante (36) des Deckblatts (16) durch Bewegen mindestens eines Querschiebers (52) des zweiten Klemmelements (32) von einer äußeren Position in eine innere Position, wobei sich der oder jeder Querschieber (52) in der inneren Position in Längsrichtung vor dem mindestens einen Längsschieber (48) erstreckt, wenn sich der erste Formabschnitt (18) in der Formposition in Bezug auf den zweiten Formabschnitt (24) befindet und sich der mindestens eine Längsschieber (48) in der zurückgezogenen Position befindet, wobei sich der oder jeder Querschieber (52) in der äußeren Position nicht in Längsrichtung vor dem mindestens einen Längsschieber (48) erstreckt.

## Revendications

1. Appareil permettant de produire un panneau de garniture (12) présentant au moins un substrat (14) et une feuille de couverture (16) stratifiée sur ledit substrat (14), l'appareil (10) comprenant :
- une première section de moule (18), avec une première surface (20) et un dispositif de maintien (22) qui maintient le substrat (14) sur la première surface (20) ;
- une seconde section de moule (24), avec une seconde surface (26) ;
- un cadre de serrage (28), avec un premier élément de serrage (30), un second élément de serrage (32) et un entraînement de serrage (34) déplaçant le premier élément de serrage (30) et le second élément de serrage (32) l'un par rapport à l'autre entre une position de serrage de la feuille de couverture et une position de relâchement de la feuille de couverture, un bord (36) de la feuille de couverture (16) étant serré entre le premier élément de serrage (30) et le second élément de serrage (32) dans la position de serrage, le bord (36) de la feuille de couverture (16) étant libre par rapport au premier élément de serrage (30) et/ou au second élément de serrage (32) dans la position de relâchement, la feuille de couverture (16) s'étendant entre la première surface (20) et la seconde surface (26) dans la position de serrage ;
- un entraînement principal (29) déplaçant la première section de moule (18) et la seconde section de moule (24) l'une par rapport à l'autre entre une position de moulage et une position ouverte, la première surface (20) et la seconde surface (26) étant pressées l'une contre l'autre avec le substrat (14) et la feuille de couverture (16) entre elles dans la position de moulage, la première surface (20) et la seconde surface (26) étant éloignées l'une de l'autre en position ouverte, dans lequel l'entraînement principal (29) déplace la première section de moule (18) par rapport à la seconde section de moule (24) longitudinalement entre la position de moulage et la position ouverte,
l'appareil étant **caractérisé en ce que** la première section de moule (18) comprend une partie principale (45) définissant une zone principale (46) de la première surface (20) et au moins un coulisseau longitudinal (48) mobile par rapport à la partie principale (45) entre une position étendue et une position rétractée, le ou chaque coulisseau longitudinal (48) définissant une première zone de bord de surface (50) de la première surface (20) dans la position étendue, et le ou chaque coulisseau longitudinal (48) étant rétracté longitudinalement à l'écart de la première surface (20) dans la position rétractée.

2. Appareil selon la revendication 1, dans lequel le cadre de serrage (28) est conçu pour régler la force de serrage par laquelle le bord (36) de la feuille de couverture (16) est serré entre le premier élément de serrage (30) et le second élément de serrage (32) dans la position de serrage.

3. Appareil selon la revendication 1 ou 2, dans lequel le premier élément de serrage (30) présente une première surface de serrage (38), le second élément de serrage (32) présente une seconde surface de serrage (40), la première surface de serrage (38) et la seconde surface de serrage (40) serrant le bord (36) de la feuille de couverture (16) entre elles dans la position de serrage.

4. Appareil selon la revendication 3, dans lequel le cadre de serrage (28) comprend une butée réglable (42), capable de régler l'espacement entre la première surface de serrage (38) et la seconde surface de serrage (40) dans la position de serrage.

5. Appareil selon l'une quelconque des revendications 1 à 4, dans lequel le second élément de serrage (32) comprend au moins un coulisseau transversal (52), mobile par rapport à la seconde section de moule (24) entre une position extérieure et une position intérieure, dans lequel le ou chaque coulisseau transversal (52) en position intérieure s'étend longitudinalement devant l'au moins un coulisseau longitudinal (48) lorsque la première section de moule (18) est dans la position de moulage par rapport à la seconde section de moule (24) et que l'au moins un coulisseau longitudinal (48) est dans la position rétractée, le ou chaque coulisseau transversal (52) en position extérieure ne s'étend pas longitudinalement devant l'au moins un coulisseau longitudinal (48).

6. Appareil selon la revendication 5 et la revendication 3 ou 4, dans lequel le ou chaque coulisseau transversal (52) définit une partie de la seconde surface de serrage (40).

7. Appareil selon la revendication 5 ou 6, dans lequel :
- lorsque la première section de moule (18) est dans la position de moulage par rapport à la seconde section de moule (24) et que le ou chaque coulisseau longitudinal (48) est dans la position déployée, la première zone de bord de surface (50) est pressée contre une zone correspondante (54) de la seconde zone de surface (26) ;
- lorsque la première section de moule (18) est dans la position de moulage par rapport à la seconde section de moule (24) et que le ou chaque coulisseau longitudinal (48) est dans la position rétractée, une cavité (56) est créée dans la première section de moule (18) pour recevoir au moins un coulisseau transversal (52) en position intérieure.

8. Procédé permettant de produire un panneau de garniture (10) présentant au moins un substrat (14) et une feuille de couverture (16) stratifiée sur ledit substrat (14), le procédé comprenant les étapes consistant à :
- agencer le substrat (14) contre une première surface (20) d'une première section de moule (18) ;
- agencer la feuille de couverture (16) dans un cadre de serrage (28), un bord (36) de la feuille de couverture (16) étant serré entre un premier élément de serrage (30) et un second élément de serrage (32), la feuille de couverture (16) s'étendant entre la première surface (20) et une seconde surface (26) d'une seconde section de moule (24) ;
- déplacer la première section de moule (18) et la seconde section de moule (24) l'une par rapport à l'autre vers une position de moulage, la première surface (20) et la seconde surface (26) étant pressées l'une contre l'autre avec le substrat (14) et la feuille de couverture (16) entre elles dans la position de moulage ;
le procédé étant **caractérisé par**
- le déplacement au moins d'un coulisseau longitudinal (48) de la première section de moule (18) par rapport à une partie principale (45) de la première section de moule (18) d'une position étendue vers une position rétractée, la partie principale (45) définissant une zone principale (46) de la première surface (20), le ou chaque coulisseau longitudinal (48) définissant une première zone de bord de surface (50) de la première surface (20) dans la position étendue, le ou chaque coulisseau longitudinal (48) étant rétracté longitudinalement à l'écart de la première surface (20) dans la position rétractée ;
- le pliage du bord (36) de la feuille de couverture (16) en déplaçant au moins un coulisseau transversal (52) du second élément de serrage (32) d'une position extérieure vers une position intérieure, dans lequel le ou chaque coulisseau transversal (52) en position intérieure s'étend longitudinalement devant l'au moins un coulisseau longitudinal (48) lorsque la première section de moule (18) est dans la position de moulage par rapport à la seconde section de moule (24) et que l'au moins un coulisseau longitudinal (48) est dans la position rétractée, le ou chaque coulisseau transversal (52) en position extérieure ne s'étend pas longitudinalement devant l'au moins un coulisseau longitudinal (48).
